# EUROPÄISCHE PATENTSCHRIFT

(11) **EP 1 432 928 B1**
(45) Veröffentlichungstag und Bekanntmachung des Hinweises auf die Patenterteilung: **13.04.2005**
(21) Anmeldenummer: 02798717.1
(22) Anmeldetag: 12.09.2002
(51) Int. Cl.: F16D 69/02, B29C 59/10, C04B 41/00

(54) **VERFAHREN UND VORRICHTUNG ZUM WÄRMEBEHANDELN EINES FORMTEILS**
METHOD AND DEVICE FOR HEAT TREATING A SHAPED PART
PROCEDE ET DISPOSITIF DE TRAITEMENT THERMIQUE D'UNE PIECE MOULEE

(30) Priorität: 14.09.2001 DE 10145442; 05.01.2002 DE 10200240
(43) Veröffentlichungstag der Anmeldung: 30.06.2004
(73) Patentinhaber: TMD Friction GmbH, 51381 Leverkusen (DE)
(72) Erfinder: HOGENKAMP, Wolfgang, 42885 Remscheid (DE)
(74) Vertreter: Schmidt, Frank-Michael, Dr.-Ing.
(86) Internationale Anmeldenummer: PCT/EP2002/010259
(87) Internationale Veröffentlichungsnummer: WO 2003/025416

(56) Entgegenhaltungen:
- EP-A- 0 263 758
- EP-A- 1 085 231
- WO-A-97/19277
- DE-A- 3 516 759
- US-A- 4 456 578

## Beschreibung

Die Erfindung betrifft ein Verfahren und eine Vorrichtung nach den Oberbegriffen der Patentansprüche 1 und 10.

Reibbeläge sollen möglichst bereits bei ihrem Ersteinsatz einen konstanten Reibwert aufweisen. Ein unbehandelter Belag weist nach seiner Herstellung jedoch in aller Regel einen Reibwertabfall bei erster Belastung auf. Erst nach einer gewissen Einlaufzeit karbonisiert die reibaktive Oberfläche des Belags, so daß sich der Reibwert stabilisiert.

Gerade bei Bremsen wird aus Sicherheitsgründen von Anfang an eine gute Bremswirkung und ein über alle Lastfälle konstanter Reibwert verlangt. Der Reibbelag wird daher häufig einer Nachbehandlung unterzogen, die das sogenannte Initialfading vermeidet und den Reibwert stabilisiert.

Es ist aus der Praxis bekannt, Reibbeläge nach dem Schleifen zu "scorchen". Dabei wird der Belag gegen eine ca. 450°C bis 800°C heiße Platte gepreßt. Es ist ferner bekannt, die Reibbelag-Oberfläche zu beflammen oder mit Laserstrahlen oder Infrarotlicht zu bearbeiten. Durch die Verkohlung der Reibbelag-Oberfläche erhält man einen Reibbelag mit konstantem Reibwert. Derart vorbehandelte Beläge müssen nicht mehr "eingebremst" werden. Sie sind von Beginn an voll einsatzfähig.

Nachteilig bei den bekannten Verfahren ist der geringe Wirkungsgrad der Wärmebehandlung. Durch die unnötige Erwärmung von Umgebung und Bereichen des Bremsbelags, die keiner Wärmebehandlung bedürfen, sind die Energieverluste erheblich. Außerdem ist der Prozeß zeitaufwendig.

Gleiche Überlegungen gelten für die Härtung des Bremsbelags. Nach dem Pressen wird der Bremsbelag üblicherweise in
einem Ofen ausgehärtet. Auch hier treten Energieverluste durch Erwärmung "nicht relevanten" Materials auf.

Es ist Aufgabe der Erfindung, die bei der Wärmebehandlung auftretenden Energieverluste zu reduzieren und den Prozeß ggf. zu verkürzen.

Zur Lösung dieser Aufgabe weist das erfindungsgemäße Verfahren die Merkmale des Patentanspruchs 1 auf.

Wesentlicher Vorteil der Erfindung ist die gezielte Einbringung von Energie in den zu härtenden oder zu scorchenden Reibbelagkörper, wobei sich die Erfindung dessen elektrische Leitfähigkeit zunutze macht. Die Energieverluste sind gering, wie auch der gesamte Energieverbrauch gering ist, da die Reibbelagmasse "von innen heraus" erwärmt wird. Ein weiterer Vorteil besteht in den kurzen Scorch- bzw. Härtungszeiten, die sich auf wenige Sekunden oder Minuten reduzieren lassen.

Die Elektroden weisen eine Potentialdifferenz auf, die den Stromfluß bewirkt. Die Reibbelagmasse bildet einen elektrischen Widerstand, der sich erwärmt. Insbesondere Metalle, aber auch Graphit-, Koks- und Kohleanteile sind elektrisch leitende Bestandteile des Reibbelags. Vorteilhafterweise werden die elektrische Spannung und die Zeitdauer des Stromflusses in Abhängigkeit von der Tiefe und der Intensität der Wärmebehandlung eingestellt. Je länger Energie auf den Reibbelag einwirkt, desto wärmer wird der Belag und desto größer ist dessen "Durchhärtung". Durch Wärmeleitung werden über die Zeit auch nicht vom Strom durchflossene Bereiche temperiert. Im übrigen haben auch der Elektrodenabstand und die Elektrodenform Einfluß auf die Eindringtiefe der elektrischen Energie. Die Stromdichte und damit die eingetragene elektrische Energie nimmt mit dem Abstand der Elektroden ab. Liegen die Elektroden dicht beieinander, so reicht eine geringe Spannung, um einen hohen Strom fließen zu lassen, wie es z. B. beim Scorchen gewünscht ist. Es ist grundsätzlich auch eine Kombination von Härten und Scorchen möglich.

Die US-A-4,456,578 zeigt die Verwendung von Elektroden beim Sintern und Verkleben eines Reibbelages an der Trägerplatte, wobei die Elektroden großflächig und im wesentlichen einteilig ausgeführt sind. Bei der Strombehandlung liegen die Elektroden einander gegenüber.

Beim Härten wird vorzugsweise ein Stromfluß zwischen der Reibfläche und der entgegengesetzten Seite des Reibbelags bzw. einer der anderen Seite des Reibbelags zugeordneten Trägerplatte erzeugt. Scheibenbremsbeläge werden in aller Regel bereits auf der Trägerplatte aufgebracht gehärtet bzw. gescorcht. Das Potentialgefälle entsteht also zwischen der Reibfläche und der Trägerplatte. Gekrümmte Trommelbrems-Reibbeläge hingegen werden ohne Trägerplatte gehärtet bzw. gescorcht. Hier wird das Potentialgefälle zwischen den entgegengesetzten Flachseiten des Reibbelags erzeugt.

Die EP-A-0 263 758 zeigt die Einwirkung von Stromentladungen auf ein Formteil, wobei Strom durch das Formteilvolumen hindurch tritt.

In wesentlicher Weiterbildung der Erfindung wird vorgeschlagen, daß der elektrische Widerstand der Reibbelagmasse zwischen zwei Elektroden ermittelt wird und daß die Spannung und die Zeitdauer des Stromflusses in Abhängigkeit von dem ermittelten Widerstand des Reibbelags eingestellt werden. Über den elektrischen Widerstand erhält man allgemeine Aussagen über Art, Güte und Homogenität des verwendeten Werkstoffs. Je höher der elektrische Widerstand, um so höher muß die anliegende Spannung sein und umgekehrt, wenn eine definierte Energiemenge zugeführt werden soll. Beim Einsatz mehrerer Elektroden können Schwankungen des Widerstands über den Reibbelag ermittelt werden, wie sie z.B. bei einer inhomogenen Reibbelagmasse (beispielsweise aufgrund unvollkommener Mischung) auftreten. Die Spannung und die Zeitdauer des Stromflusses kann dann der Art und Güte des Werkstoffs örtlich angepaßt werden. Eine permanente Qualitätsüberwachung während der Wärmebehandlung ist insbesondere dann möglich, wenn der elektrische Widerstand während der Wärmebehandlung gemessen wird und die Parameter ebenfalls während der Wärmebehandlung angepaßt werden. Die Erfindung gestattet also auch bei einem inhomogenen Reibbelag eine gleichmäßige Wärmebehandlung.

Wie bereits gesagt, findet die Erfindung insbesondere beim Härten und/oder beim Scorchen Anwendung. Vorzugsweise wird der Reibbelag während der Wärmebehandlung eingespannt und/oder gepreßt. Damit wird einerseits ein zeit- und kostenintensiver Arbeitsgang eingespart, andererseits kann von vornherein eine Riß- und Blasenbildung durch Ausgasungen und Gefügeveränderungen auf und in dem Reibbelag unterbunden werden. Durch die Höhe des aufgebrachten Drucks kann die spätere Kompressibilität des Reibbelags eingestellt werden.

Die Aufgabe der Erfindung wird ferner gelöst durch eine gattungsgemäße Vorrichtung mit den Merkmalen des Patentanspruchs 10.

Die Elektroden können flächig ausgebildet sein, wobei man der Reibfläche des Reibbelags und dessen entgegengesetzter Fläche bzw. der dort angeordneten Trägerplatte je mindestens eine der flächigen Elektroden zuordnet. Die Elektroden können Druck auf den Reibbelag ausüben, und zwar vorzugsweise 0,1N/mm² bis 5N/mm².

Eine bevorzugte Ausführungsform ergibt sich dadurch, daß die Elektroden eine Matrix bilden, wobei an jeweils zwei benachbarte Elektroden eine Spannung anlegbar ist. Die Elektroden können also flächenmäßig über den gesamten Reibbelag verteilt sein. Je mehr Elektroden vorgesehen sind, desto genauer läßt sich die Wärmeeinwirkung auf bzw. in den Reibbelag steuern. Ein relativ geringer Abstand zwischen den Elektroden gestattet "eine hohe Auflösung", d. h., die Wärmeeinwirkung kann auch auf die äußeren Schichten bzw. lokalen Bereiche des Reibbelags begrenzt werden. Die Feldlinien zwischen zwei Elektroden verlaufen im wesentlichen bogenförmig. Je höher die angelegte Spannung ist, desto tiefer erstrecken sich die energetisch wirksamen Feldlinien in den Bremsbelag hinein. Je weiter zwei benachbarte Elektroden voneinander beabstandet sind, desto großflächiger ist der wärmebehandelte Bereich. Die "Auflösung" ist dann gröber.

Vorzugsweise sind die Elektroden in einer Aufnahme gelagert, die eine der Matrix entsprechende Lochmatrix bildet. Wenn die Elektroden-Aufnahme in Richtung auf den Reibbelag bewegbar ist, kann sie gleichzeitig als Preßstempel eingesetzt werden. Durch die Auflage der Aufnahme auf dem Reibbelag während des Wärmeeintrags wird eine Riß- und Blasenbildung des Reibbelags vermieden. Wie zuvor bereits erwähnt, kann außerdem ein Arbeitsgang eingespart werden, nämlich ein gesondertes Härten des Reibbelags. Ist eine übliche Reibbelagpresse mit einem mit Elektroden ausgestatteten Preßwerkzeug versehen, dann kann während des Pressens der Härte- und Scorchvorgang ablaufen. Ein wesentlicher weiterer Vorteil der absenkbaren Aufnahme besteht in deren Wärmedämmung. In den Reibbelag eingebrachte Wärme wird durch die aufliegende Aufnahme im Reibbelag "gehalten".

Eine besonders einfache Ausführungsform ist dadurch gekennzeichnet, daß Elektroden gleicher Polarität jeweils spalten- oder zeilenweise angeordnet sind. Dies ergibt einen konstruktiv besonders einfachen Aufbau der Matrix, wobei insbesondere die Kontaktierung und Ansteuerung der Elektroden günstig ist. Im Normalfall ist die Anordnung jedoch so gewählt, daß spalten- und zeilenweise alternierende Polaritäten angelegt sind.

Für die Erzeugung eines möglichst homogenen Stromflusses über den gesamten Reibbelag ist eine gute Kontaktierung zwischen Elektroden und Reibbelag unumgänglich. Die Erfindung schlägt daher vor, daß die Elektroden einzeln axial bewegbar und in Richtung auf den Reibbelag, vorzugsweise durch Federkraft, vorgespannt sind. Die Eindringtiefe der Elektroden in den Reibbelag kann durch die Vorspannung eingestellt werden. Selbstverständlich kann es gewünscht sein, daß die Elektroden lediglich auf der Oberfläche des Reibbelags aufliegen. Auch dies ist über die Vorspannung der Federkraft einstellbar.

Die erfindungsgemäße Vorrichtung ist vorzugsweise zur Wärmebehandlung verschiedener Formen (und Querschnittsformen) von Reibbelägen ausgelegt. Vorteilhafterweise sind deshalb die Elektroden einzeln oder in Gruppen absenkbar. Beispielsweise werden nur diejenigen Elektroden auf den Reibbelag abgesenkt, die der "aktiven" Reibfläche des Belags zugeordnet sind. Ein ungewünschtes Eindringen von starren Elektroden kann damit vermieden werden.

Ein besonders guter Kontakt zwischen den Elektroden und dem Reibbelag wird dadurch geschaffen, daß die Elektroden an ihrem reibbelagseitigen Ende spitz ausgebildet sind. Die Elektroden können aus nicht-metallischen Werkstoffen (z.B. Graphit) bestehen. Vorzugsweise sind sie aus gut leitenden, wärmefesten Metallen oder Metall-Legierungen ausgebildet, beispielsweise aus Edelstahl oder Platin etc. Damit wird ein Festsetzen des Reibmaterials an den Elektroden unterbunden. Für eine bessere elektrische Leitfähigkeit können die Elektroden mit einem Kern aus Kupfer oder Silber ausgebildet sein.

Für eine Durchhärtung schlägt die Erfindung schließlich vor, daß die Elektroden und eine der der Reibfläche entgegengesetzte Seite des Reibbelags zugeordnete Trägerplatte ein Potentialgefälle aufweisen. Es wird also ein Stromfluß zwischen der Reibfläche und der Trägerplatte bzw. der reibflächenabgewandten Seite erzeugt und damit der Reibbelag homogen wärmebehandelt. Diese Art der Härtung kann mit dem Arbeitsschritt des Scorchens kombiniert werden. Während für das Härten in aller Regel der Strom direkt durch den Reibbelag hindurchgeleitet wird, wird man für das Scorchen lediglich die oberen Elektroden (mit unterschiedlicher Polarität) zum Einsatz bringen. Die Zeitersparnis durch die Verbindung der beiden Arbeitsschritte ist erheblich.

In einigen Fällen kann es vorteilhaft sein, wenn die Spannungsquellen getaktet und gepulst werden, und zwar vorzugsweise mit einer Frequenz von 0,1Hz bis 50Hz. Vorteilhafterweise arbeitet man mit Spannungen von 0,1V bis 300V und mit Stromstärken von 1A bis 1000A. Dadurch wird verhindert, daß es zu lokalen glühenden oder brennenden Zonen kommt, die eine unerwünschte Materialveränderung zur Folge haben können. Durch die kurzzeitige Unterbrechung des Energieeintrags kann die Wärme in die Belagmatrix abfließen. Es wird eine Überhitzung vermieden. Da grundsätzlich Gleichoder Wechselspannungen verwendet werden können, sind auch sehr niederfrequente Wechselströme wirkungsvoll.

Alternativ zu einer spalten- und zeilenaufweisenden Elektrodenmatrix schlägt die Erfindung vor, die Elektroden am Umfang mindestens einer Walze anzuordnen und derart auszubilden, daß sie auf dem Reibbelag abrollbar sind. Eine Walzenanordnung gestattet ein Härten bzw. Scorchen im Durchlauf. Grundsätzlich besteht die Möglichkeit, Walzen unterschiedlicher Polarität hintereinander anzuordnen, wobei entweder der Reibbelag unter den Walzen geführt wird oder umgekehrt. Der Stromfluß erfolgt dann zwischen je zwei Walzen. Vorteilhafterweise sind jedoch mehrere Elektroden alternierender Polarität auf einer Walze angeordnet. Zwischen den - beispielsweise als Scheiben ausgebildeten - Elektroden sind Isolierabschnitte vorgesehen. Es reicht bereits eine Walze für eine Wärmebehandlung. Für einen höheren Durchsatz und eine gleichmäßigere Erwärmung der Reibbeläge können mehrere Walzen hintereinander angeordnet sein, die beispielsweise 1 cm voneinander beabstandet sind.

Weitere vorteilhafte Ausführungsbeispiele sind in den übrigen Unteransprüchen gekennzeichnet.

Bei der Beschreibung der Erfindung wird vorwiegend auf die Herstellung von Reibbelägen für Brems- oder Kupplungsbeläge Bezug genommen. Anwendbar hingegen ist die Erfindung auf die Wärmebehandlung beliebiger Formteile, die aus bindemittelhaltigen, elektrisch leitfähigen Preßmassen bestehen. Als weiteres Beispiel sind Kohlebürsten von Elektromotoren zu nennen, deren spezifischer elektrischer Widerstand 50Ωmm²/m beträgt. In jedem Falle kann mit dem erfindungsgemäßen Verfahren eine rasche, gleichmäßige Aushärtung des Bindemittels erzielt werden. Außerdem ist eine gezielte und wirksame Oberflächenbehandlung möglich. Die Formgebung der Formteile spielt keine wesentliche Rolle, siehe die Bearbeitung von Scheiben- und Trommelreibbelägen.

Im folgenden wird die Erfindung anhand der beiliegenden Zeichnung näher erläutert. Die Zeichnung zeigt in
Figur 1 eine in schematischer Darstellung teilgeschnittene Seitenansicht eines Bremsbelags mit angesetzten Elektroden; und
Figur 2 in schematischer Darstellung eine Draufsicht auf einen Bremsbelag mit einer angedeuteten Elektrodenmatrix.

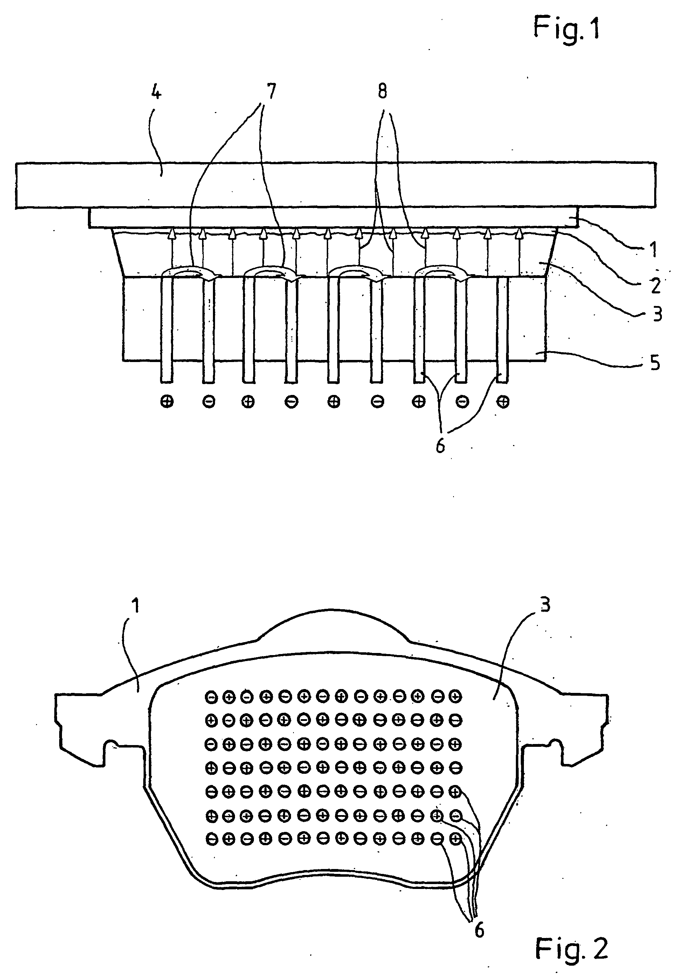

Der Bremsbelag gemäß Figur 1 weist eine Belagträgerplatte 1, eine Underlayermasse 2 sowie einen Reibbelag 3 auf. Der Bremsbelag ist zwischen eine Druckplatte 4 und eine Aufnahme 5 eingespannt, die eine Lochmatrix bildet und in der Elektroden 6 gelagert sind. Die Aufnahme 5 besteht aus nicht-leitendem Material. An die Elektroden 6 ist eine (nicht gezeigte) Spannungsquelle angeschlossen. Die benachbarten Elektroden 6 weisen jeweils unterschiedliche Polaritäten auf, wie es durch "+" bzw. "-" gekennzeichnet ist. Durch die unterschiedlichen Polaritäten wird zwischen benachbarten Elektroden ein Stromfluß erzeugt. Dieser Stromfluß ist durch die Pfeile 7 angedeutet. Die Feldlinien verlaufen bogenförmig. Mit einer derartigen Anordnung läßt sich der Reibbelag 3 scorchen.

Zum Härten kann auch zwischen den Elektroden 6 und der Trägerplatte 1 ein Potentialgefälle angelegt werden. Der Stromfluß erfolgt dann in Richtung der Pfeile 8 und der gesamte Reibbelag 3 wird durchdrungen. Eine homogene Erwärmung des gesamten Reibbelags ist die Folge. Gleichermaßen denkbar ist das Erzeugen eines Stromflusses zwischen den beiden entgegengesetzten Flachseiten des Reibbelags. Diese Alternative kommt beim Härten bzw. Scorchen von Reibbelägen ohne Trägerplatte in Betracht, z. B. bei Trommelbrems-Reibbelägen

Mit der Erfindung ist eine effiziente Härtung des Reibbelags 3 möglich. Die dargestellte Anordnung gestattet zusätzlich ein Pressen des Reibbelags während der Härtung. Hierzu wird der Bremsbelag auf der einen Seite durch die Aufnahme 5 druck-belastet, von der anderen Seite erfolgt ein Gegendruck über eine Druckplatte 4. Selbstverständlich kann zusätzlich zu der zweiseitigen Druckaufbringung eine seitliche Einspannung des Brems- bzw. Reibbelags vorgesehen sein.

Die reibbelagseitige Oberfläche der Aufnahme 5 ist plan ausgebildet. Auch die Kontaktenden der Elektroden 6 sind bei der dargestellten Ausführungsform plan ausgebildet. Sie sind starr in der Aufnahme 5 gelagert. Insbesondere, wenn der Reibbelag nicht eben (z.B. konkav oder konvex) ausgebildet ist, bietet es sich an, die Elektroden 6 in der Aufnahme 5 axial beweglich zu lagern und in Richtung auf den Reibbelag vorzuspannen. Dadurch erhält man einen optimalen Kontakt. Auch können für einen besseren Kontakt die Kontaktenden der Elektroden spitz ausgebildet sein.

Die Aufnahme 5 kann - wie gezeigt - eben ausgebildet sein. Eine ebene Aufnahme 5 wird insbesondere für Scheibenbremsbeläge verwendet. Für gekrümmte Trommelbremsbeläge ist es von Vorteil, auch die Aufnahme deren gekrümmter Form anzupassen, damit die Elektroden problemlos zur Anlage an diese oder beide Seiten gelangen können.

Figur 2 zeigt eine matrixförmige Anordnung der Elektroden 6. Die dargestellte Matrix deckt nicht die gesamte Fläche des Reibbelags 3 ab. Es sind Ausführungsformen vorgesehen, bei denen sich die Elektrodenmatrix über den Reibbelag 3 hinaus erstreckt und zur Wärmebehandlung lediglich die Elektroden über den Reibbelag abgesenkt werden. Es können also mit einer Elektrodenmatrix eine Vielzahl von Reibbelagformen optimal wärmebehandelt werden.

Die Polarität der Elektroden ist wie gesagt durch "+" und "-" gekennzeichnet. In der Darstellung sind die Polaritäten der Elektroden zeilen- und spaltenweise alternierend verteilt. In einer anderen (nicht gezeigten) Ausführungsform ist es vorgesehen, daß die Polaritäten zeilen- bzw. spaltenweise jeweils gleich sind. Dies ermöglicht einen einfachen Anschluß der Elektroden 6.

Die Anordnung arbeitet sehr schonend. Der Gesamtverschleiß ist gering, da nur der Belag und die unmittelbar an den Belag angrenzenden Bauelemente wärmebelastet sind.

Das Takten des Stromdurchflusses hat, wie erwähnt, den Vorteil, kurzfristige Überhitzungen zu vermeiden. Dennoch wird sichergestellt, daß die kritische Temperatur von 150°C nicht unterschritten wird.

Im Rahmen der Erfindung sind vielfältige Abwandlungsmöglichkeiten gegeben. So können die Elektroden flächig ausgebildet sein, wobei eine der Elektroden der Reibfläche und die andere der entgegengesetzten Fläche des Reibbelags bzw. der dort vorgesehenen Trägerplatte zugeordnet ist. Man erzielt auf diese Weise eine sehr gleichmäßige Durchhärtung. Dabei besteht die Möglichkeit, die flächigen Elektroden an den Reibbelag anzupressen, und zwar vorzugsweise mit einem Druck von 0,1N/mm² bis 5N/mm².

Bei Reibbelägen mit einer Fläche von ca. 50mm² und einer Dicke von ca. 14mm lassen sich Härtezeiten von 5s bis 180s erzielen.

## Patentansprüche

1. Verfahren zum Wärmebehandeln, insbesondere zum Härten und/oder Scorchen, eines Reibbelags eines Brems- oder Kupplungsbelags,
**dadurch gekennzeichnet,**
**daß** mehrere Elektroden in Kontakt mit der Reibfläche des Reibbelags gebracht werden, wobei zwischen den Elektroden eine Potentialdifferenz angelegt wird, und
**daß** im Reibbelag im reibflächennahen Bereich für eine bestimmte Zeitdauer ein Stromfluß erzeugt wird.

2. Verfahren nach Anspruch 1, **dadurch gekennzeichnet, daß** die elektrische Spannung und die Zeitdauer des Stromflusses in Abhängigkeit von der Tiefe und der Intensität der Wärmebehandlung eingestellt werden.

3. Verfahren nach Anspruch 1 oder 2, **dadurch gekennzeichnet, daß** der elektrische Widerstand der Reibbelagmasse zwischen zwei Elektroden ermittelt wird und daß die elektrische Spannung und die Zeitdauer des Stromflusses in Abhängigkeit von dem ermittelten Widerstand des Reibbelags eingestellt werden.

4. Verfahren nach Anspruch 3, **dadurch gekennzeichnet, daß** der elektrische Widerstand während der Wärmebehandlung gemessen wird.

5. Verfahren nach einem der Ansprüche 1 bis 4, **dadurch gekennzeichnet, daß** der Reibbelag während der Wärmebehandlung eingespannt und/oder gepreßt wird.

6. Verfahren nach einem der Ansprüche 1 bis 5, **dadurch gekennzeichnet, daß** ein Stromfluß zwischen der Reibfläche und der entgegengesetzten Seite des Reibbelags bzw. einer der anderen Seite des Reibbelags zugeordneten Trägerplatte erzeugt wird.

7. Verfahren nach einem der Ansprüche 1 bis 6, **dadurch gekennzeichnet, daß** mit einer Spannung von 0,1V bis 300V und einer Stromstärke von 1A bis 1000A gearbeitet wird.

8. Verfahren nach Anspruch 7, **dadurch gekennzeichnet, daß** die elektrische Spannung gepulst oder getaktet wird.

9. Verfahren nach Anspruch 8, **dadurch gekennzeichnet, daß** die Puls- oder Taktfrequenz 0,1Hz bis 50Hz beträgt.

10. Vorrichtung zum Wärmebehandeln, insbesondere zum Härten und/oder Scorchen, eines Reibbelags (3) eines Bremsoder Kupplungsbelags,
**gekennzeichnet durch**:
eine Einrichtung, die mehrere Elektroden (6) aufweist, die in Kontakt mit der Reibfläche des Reibbelags (3) bringbar sind und zwischen denen eine Potentialdifferenz anlegbar ist,
wobei die Einrichtung so ausgebildet ist, daß sie für eine bestimmte Zeitdauer im reibflächennahen Bereich einen Stromfluß erzeugt.

11. Vorrichtung nach Anspruch 10, **dadurch gekennzeichnet, daß** die Elektroden (6) derart angeordnet sind, daß sie eine Matrix bilden, wobei an jeweils zwei benachbarte Elektroden eine Spannung anlegbar ist.

12. Vorrichtung nach Anspruch 11, **dadurch gekennzeichnet, daß** die Elektroden (6) in einer Aufnahme (5) gelagert sind, die eine der Matrix entsprechende Lochmatrix bildet.

13. Vorrichtung nach Anspruch 12, **dadurch gekennzeichnet, daß** die Elektroden-Aufnahme in Richtung auf den Reibbelag (3) bewegbar ist.

14. Vorrichtung nach einem der Ansprüche 11 bis 13, **dadurch gekennzeichnet, daß** Elektroden (6) gleicher Polarität jeweils spalten- oder zeilenweise angeordnet sind.

15. Vorrichtung nach einem der Ansprüche 11 bis 14, **dadurch gekennzeichnet, daß** an die Elektroden (6) spalten- und zeilenweise alternierende Polaritäten angelegt sind.

16. Vorrichtung nach einem der Ansprüche 10 bis 15, **dadurch gekennzeichnet, daß** die Elektroden (6) einzeln axial bewegbar und in Richtung auf den Reibbelag (3) vorzugsweise durch Federkraft vorgespannt sind.

17. Vorrichtung nach einem der Ansprüche 10 bis 15, **dadurch gekennzeichnet, daß** die Elektroden (6) einzeln oder in Gruppen absenkbar sind.

18. Vorrichtung nach einem der Ansprüche 10 bis 17, **dadurch gekennzeichnet, daß** die Elektroden (6) an ihrem reibbelagseitigen Ende spitz ausgebildet sind.

19. Vorrichtung nach einem der Ansprüche 10 bis 18, **dadurch gekennzeichnet, daß** der Abstand von Elektroden (6) unterschiedlichen Potentials kleiner ist als die Dicke des Reibbelags (3).

20. Vorrichtung nach einem der Ansprüche 10 bis 19, **dadurch gekennzeichnet, daß** die Elektroden (6) und eine der der Reibfläche entgegengesetzten Seite des Reibbelags (3) zugeordnete Trägerplatte (1) ein Potentialgefälle aufweisen.

21. Vorrichtung nach Anspruch 10, **dadurch gekennzeichnet, daß** die Elektroden (6) am Umfang mindestens einer Walze angeordnet sind, die auf dem Reibbelag (3) abrollbar ist.

22. Vorrichtung nach Anspruch 21, **dadurch gekennzeichnet, daß** mehrere Elektroden (6) alternierender Polarität auf einer Walze angeordnet sind.

23. Vorrichtung nach Anspruch 10, **dadurch gekennzeichnet, daß** die Elektroden flächig ausgebildet sind, wobei der Reibfläche und der entgegengesetzten Fläche des Reibbelags bzw. der auf letzterer vorgesehenen Trägerplatte jeweils mindestens eine Elektrode zugeordnet ist.

24. Vorrichtung nach Anspruch 23, **dadurch gekennzeichnet, daß** die Elektroden mit Mitteln zum Erzeugen eines Anpreßdrucks verbunden sind.

## Claims

1. A method for heat treating, particularly for hardening and/or scorching, a friction lining of a brake or clutch lining, **characterised in that**
a plurality of electrodes are brought into contact with the friction surface of the friction lining, wherein a voltage difference is applied between the electrodes, and
that a current flow is produced in the region of the friction lining close to the friction surface for a predetermined period of time.

2. A method as claimed in claim 1, **characterised in that** the electrical potential and the period of time of the current flow are set in dependence on the depth and the intensity of the heat treatment.

3. A method as claimed in claim 1 or 2, **characterised in that** the electrical resistance of the friction lining composition is determined between two electrodes and that the electrical potential and the period of time of the current flow are set in dependence on the determined resistance of the friction lining.

4. A method as claimed in claim 3, **characterised in that** the electrical resistance is measured during the heat treatment.

5. A method as claimed in one of claims 1 to 4, **characterised in that** the friction lining is clamped and/or pressed during the heat treatment.

6. A method as claimed in one of claims 1 to 5, **characterised in that** a current flow is produced between the friction surface and the opposite side of the friction lining or a support plate associated with the other side of the friction lining.

7. A method as claimed in one of claims 1 to 6, **characterised in that** a voltage of 0.1V to 300V and a current intensity of 1A to 1000A are used.

8. A method as claimed in claim 7, **characterised in that** the electrical voltage is pulsed or cycled.

9. A method as claimed in claim 8, **characterised in that** the pulse or cycle frequency is 0.1Hz to 50Hz.

10. Apparatus for heat treating, particularly for hardening and/or scorching a friction lining (3) of a brake or clutch lining, **characterised by**
a device, which has a plurality of electrodes (6), which may be brought into contact with the friction surface of the friction lining (3) and between which a potential difference may be applied,
wherein the device is so configured that it produces a current flow in the region of the friction lining close to the friction surface for a predetermined period of time.

11. Apparatus as claimed in claim 10, **characterised in that** the electrodes (6) are so arranged that they define a matrix, wherein a voltage may be applied to each two adjacent electrodes.

12. Apparatus as claimed in claim 11, **characterised in that** the electrodes (6) are mounted in a mounting (5), which defines a matrix of holes corresponding to the matrix.

13. Apparatus as claimed in claim 12, **characterised in that** the electrode mounting is moveable in the direction towards the friction lining (3).

14. Apparatus as claimed in one of claims 11 to 13, **characterised in that** the electrodes (6) of the same polarity are arranged in columns or lines.

15. Apparatus as claimed in one of claims 11 to 14, **characterised in that** the electrodes (6) are arranged with alternating polarities in columns and lines.

16. Apparatus as claimed in one of claims 10 to 15, **characterised in that** the electrodes (6) are individually axially moveable and are biased in the direction towards the friction lining (3) preferably by the force of a spring.

17. Apparatus as claimed in one of claims 10 to 15, **characterised in that** the electrodes (6) may be lowered individually or in groups.

18. Apparatus as claimed in one of claims 10 to 12, **characterised in that** the electrodes (6) are pointed at their end closest to the friction lining.

19. Apparatus as claimed in one of claims 10 to 18, **characterised in that** the spacing of the electrodes (6) of different potential is smaller than the thickness of the friction lining (3).

20. Apparatus as claimed in one of claims 10 to 19, **characterised in that** the electrodes (6) and a support plate (1) associated with the side of the friction lining (3) opposite to the friction surface have a potential gradient.

21. Apparatus as claimed in claim 10, **characterised in that** the electrodes (6) are arranged on the periphery of at least one roller, which may rolled over the friction lining (3).

22. Apparatus as claimed in claim 21, **characterised in that** a plurality of electrodes (6) of alternating polarity are arranged on a roller.

23. Apparatus as claimed in claims 10, **characterised in that** the electrodes are of flat construction, at least one respective electrode being associated with the friction surface and the opposite surface of the friction lining or the support plate provided on the latter.

24. Apparatus as claimed in claim 23, **characterised in that** the electrodes are connected to means for producing a pressure.

## Revendications

1. Procédé de traitement thermique, en particulier de durcissement et/ou de roussissement, d'une garniture de friction d'une garniture de frein ou d'embrayage,
**caractérisé par le fait**
**que** plusieurs électrodes sont mises en contact avec la surface de friction de la garniture de friction, entre ces électrodes étant appliquée une différence de potentiel, et
le passage d'un courant est produit pendant une durée déterminée dans la garniture de friction dans la zone voisine de la surface de friction.

2. Procédé selon la revendication 1, **caractérisé par le fait que** la tension électrique et la durée de passage du courant sont fixées en fonction de la profondeur et de l'intensité du traitement thermique.

3. Procédé selon l'une des revendications 1 et 2, **caractérisé par le fait que** la résistance électrique de la matière de garniture de friction est déterminée entre deux électrodes et que la tension électrique et la durée de passage du courant sont fixées en fonction de la résistance déterminée de la garniture de friction.

4. Procédé selon la revendication 3, **caractérisé par le fait que** la résistance électrique est mesurée pendant le traitement thermique.

5. Procédé selon l'une des revendications 1 à 4, **caractérisé par le fait que** la garniture de friction est serrée et/ou comprimée pendant le traitement thermique.

6. Procédé selon l'une des revendications 1 à 5, **caractérisé par le fait qu'**un passage de courant est produit entre la surface de friction et le côté opposé de la garniture de friction ou une plaque support associée à l'autre côté de la garniture de friction.

7. Procédé selon l'une des revendications 1 à 6, **caractérisé par le fait qu'**il est utilisé une tension de 0,1 V à 300 V et une intensité de courant de 1 A à 1000 A.

8. Procédé selon la revendication 7, **caractérisé par le fait que** la tension électrique est pulsée ou rythmée.

9. Procédé selon la revendication 8, **caractérisé par le fait que** la fréquence de pulsation ou de rythme est de 0,1 Hz à 50 Hz.

10. Appareil de traitement thermique, en particulier de durcissement et/ou de roussissement, d'une garniture de friction (3) d'une garniture de frein ou d'embrayage,
**caractérisé par** :
un dispositif qui présente plusieurs électrodes (6) qui peuvent être mises en contact avec la surface de friction de la garniture de friction (3) et entre lesquelles peut être appliquée une différence de potentiel,
ce dispositif étant conçu de façon à produire pendant une durée déterminée le passage d'un courant dans la zone voisine de la surface de friction.

11. Appareil selon la revendication 10, **caractérisé par le fait que** les électrodes (6) sont disposées de façon à former une matrice, une tension pouvant être appliquée à chaque fois deux électrodes voisines.

12. Appareil selon la revendication 11, **caractérisé par le fait que** les électrodes (6) sont montées dans un support (5) qui forme une matrice de trous correspondant à la matrice.

13. Appareil selon la revendication 12, **caractérisé par le fait que** le support d'électrodes est mobile en direction de la garniture de friction (3).

14. Appareil selon l'une des revendications 11 à 13, **caractérisé par le fait que** les électrodes (6) de même polarité sont disposées en colonnes ou en lignes.

15. Appareil selon l'une des revendications 11 à 14, **caractérisé par le fait qu'**aux électrodes (6) sont appliquées des polarités qui alternant en colonnes et en lignes.

16. Appareil selon l'une des revendications 10 à 15, **caractérisé par le fait que** les électrodes (6) sont mobiles axialement individuellement et précontraintes en direction de la garniture de friction (3) de préférence par une force élastique.

17. Appareil selon l'une des revendications 10 à 15, **caractérisé par le fait que** les électrodes (6) peuvent être descendues individuellement ou par groupes.

18. Appareil selon l'une des revendications 10 à 17, **caractérisé par le fait que** les électrodes (6) sont pointues à leur extrémité côté garniture de friction.

19. Appareil selon l'une des revendications 10 à 18, **caractérisé par le fait que** la distance des électrodes (6) de potentiel différent est inférieure à l'épaisseur de la garniture de friction (3).

20. Appareil selon l'une des revendications 10 à 19, **caractérisé par le fait que** les électrodes (6) et une plaque support (1) associée au côté de la garniture de friction (3) opposé à la surface de friction présentent une chute de potentiel.

21. Appareil selon la revendication 10, **caractérisé par le fait que** les électrodes (6) sont placées sur le pourtour d'un cylindre qui peut rouler sur la garniture de friction (3).

22. Appareil selon la revendication 21, **caractérisé par le fait que** plusieurs électrodes (6) de polarité alternante sont placées sur un cylindre.

23. Appareil selon la revendication 10, **caractérisé par le fait que** les électrodes sont plates et au moins une électrode est associée à la surface de friction et à la surface opposée de la garniture de friction ou la plaque support prévue sur cette dernière surface.

24. Appareil selon la revendication 23, **caractérisé par le fait que** les électrodes sont reliées par des moyens de production d'une pression de serrage.
